# FASCICULE DE BREVET EUROPEEN

(11) **EP 3 197 586 B1**
(45) Date de publication et mention de la délivrance du brevet: **06.12.2023**
(21) Numéro de dépôt: 15778992.6
(22) Date de dépôt: 24.09.2015
(51) Int. Cl.: B01D 53/04, B01J 20/00, B01D 53/72, B01D 53/82

(54) **DISPOSITIF DE FILTRATION POUR APPAREIL DE PURIFICATION D'AIR**
FILTRIERVORRICHTUNG FÜR LUFTREINIGUNGSGERÄT
FILTRATION DEVICE FOR AIR PURIFICATION APPLIANCE

(30) Priorité: 24.09.2014 FR 1459039
(43) Date de publication de la demande: 02.08.2017
(73) Titulaire: SEB S.A., 69130 Ecully (FR); Ethera, 38000 Grenoble (FR)
(72) Inventeur: ESCALETTES, Bertrand, F-27120 Menilles (FR); CALISKAN, Alper, F-27200 Vernon (FR); MORIN, Patrick, F-27630 Heubecourt (FR); CHEVALLIER, Emmanuel, F-91190 Gif-sur-Yvette (FR); CARON, Thomas, F-91300 Massy (FR); COLOMB, Sylvain, F-38000 Grenoble (FR)
(74) Mandataire: SEB Développement
(86) Numéro de dépôt international: PCT/FR2015/052548
(87) Numéro de publication internationale: WO 2016/046498

(56) Documents cités:
- EP-A1- 0 897 738
- EP-A2- 1 121 978
- WO-A1-2010/101520
- WO-A1-2014/078708
- FR-A1- 2 890 745
- US-A- 4 917 862
- US-A1- 2014 224 127

## Description

La présente invention concerne de manière générale le domaine des appareils purificateurs d'air ambiant et plus particulièrement des dispositifs de filtration pour ce type d'appareil et ayant des capacités d'absorption notamment des aldéhydes et formaldéhyde.

Par aldéhyde, on désigne toute molécule organique ayant une fonction carbonyle terminale choisie de préférence parmi le formaldéhyde, l'acétaldéhyde, le propionaldéhyde, le butyraldéhyde, l'acroléine, le pentanal, l'hexanal et le benzaldéhyde.

Les aldéhydes comptent parmi les polluants chimiques domestiques les plus abondants. Leurs sources sont extrêmement nombreuses. Elles peuvent être notamment en relation avec une production extérieure comme la photo-oxydation du méthane. Cependant, les sources principales d'émission des aldéhydes se trouvent à l'intérieur des habitations et sont très diverses : les résines et les colles servant à fabriquer les bois agglomérés, les panneaux de particules et les contreplaqués, les mousses isolantes uréeformol utilisées comme isolant thermique, par injection dans les murs et les cloisons, dans les revêtements textiles, papiers peints, peintures, cuirs...

Le formaldéhyde est également un agent conservateur, désinfectant et déshydratant. Pour ces raisons, il est abondamment employé comme solvant en milieu hospitalier pour la désinfection des instruments chirurgicaux mais aussi dans l'industrie des services funéraires où l'on pratique la thanatopraxie.

Compte tenu des effets nocifs de tels polluants chimiques sur la santé publique, il apparaît nécessaire d'assurer la purification de l'air ambiant des bâtiments d'habitation en réduisant la teneur en aldéhydes, et notamment en formaldéhyde, et offrant de nouveaux dispositifs de dépollution.

Selon l'art antérieur connu, les méthodes d'épuration des polluants chimiques gazeux présents dans l'air ambiant peuvent se classer en 2 catégories :
- Destruction du polluant par dégradation des composés organiques jusqu'à minéralisation totale c'est-à-dire jusqu'à les transformer en CO2 et H2O par oxydation ou photo-oxydation.
- Piégeage par des matériaux adsorbants poreux qui retiennent les polluants, mais ne les dégradent pas. Ces matériaux sont de type zéolite ou charbon actif et sont couramment utilisés dans le traitement de l'air ambiant pour piéger les composés organiques volatils et les odeurs.

La première catégorie est réalisée à partir de dispositifs utilisant des oxydants tels que l'ozone, ou favorisant l'oxydation comme les plasmas ou la photo-catalyse.

La deuxième catégorie utilise les pouvoirs et les capacités adsorbants des matériaux poreux à grande surface spécifique (> 100m2/g), elle ne permet pas de dégrader les molécules, elle les retient sur un média poreux.

La première catégorie présente les désavantages d'être complexe et relativement coûteuse. De plus elle peut générer des produits de sous décomposition qui peuvent s'avérer plus dangereux que le composé éliminé.

La deuxième catégorie présente l'inconvénient d'avoir des taux de piégeage très différents d'un composé chimique à éliminer à un autre. Par exemple, le charbon actif est efficace pour adsorber des composés aromatiques, mais est reconnu comme inefficace pour adsorber des aldéhydes. Par ailleurs, dans cette deuxième catégorie, le média poreux est susceptible de relarguer les molécules polluantes lorsqu'il est saturé ou soumis à une augmentation de températures ou d'humidité relative ou à une diminution de la concentration en polluant piégé. C'est le cas, par exemple, du charbon actif ou de la zéolite.

WO 2014/07808 décrit des matériaux poreux couramment utilisés pour adsorber des composés organiques volatils, notamment la zéolite ou le charbon actif : ce document décrit aussi des cartouches qui adsorbent des composés organiques volatils ; ces cartouches adsorbantes peuvent être combinées avec des cartouches de filtration de CO2 à base d'alumine afin d'adsorber un maximum de gaz nocifs.

Selon FR 2890745, un matériau poreux particulièrement efficace pour l'élimination des aldéhydes et plus précisément du formaldéhyde est une matrice nanoporeuse d'oxydes métalliques comportant au moins une fonction réactive aux aldéhydes.

Les fabricants de matériaux adsorbants travaillent sur l'amélioration de l'efficacité de leurs matériaux en les fonctionnalisant. Malheureusement, cette fonctionnalisation se fait par imprégnation, ce qui a le désavantage de limiter l'accès à la surface spécifique dans le cas de fortes imprégnations, et donc de limiter les capacités de piégeage si l'on souhaite en imprégner une quantité suffisante.

Dans un premier aspect, un objectif de l'invention est d'améliorer les performances des dispositifs de filtration pour appareil de purification de l'air ambiant en y combinant un matériau absorbant ou adsorbant classique de composés chimiques polluants de l'air ambiant et un média adsorbant spécifique. On appellera média adsorbant spécifique ou encore média filtrant, tout matériau capable d'adsorber des composés chimiques polluants de l'air ambiant pour lesquels les matériaux adsorbants classiques n'ont pas d'efficacité ; sont visés en particulier les aldéhydes et notamment le formaldéhyde.

Dans un second aspect, un objectif de l'invention est de piéger de manière définitive les polluants de l'air ambiant par absorption.

Dans un troisième aspect, un objectif de l'invention est d'éviter le relargage dans l'air ambiant de polluants susceptibles d'être relargués par des matériaux adsorbants classiques tels que notamment la zéolite ou le charbon actif.

Ainsi, le dispositif de l'invention comprend ou est constitué d'au moins deux cartouches filtrantes, dont une contient un matériau absorbant ou adsorbant classique, et une autre contient un média adsorbant spécifique, ledit dispositif assurant le passage de l'air ambiant à travers les au moins deux cartouches, en vue du piégeage définitif et en grande quantité de la grande majorité des polluants atmosphériques.

Plus précisément, le dispositif de l'invention est un dispositif de filtration pour appareil de purification de l'air tel que décrit à la revendication 1 et comprenant une première structure de cartouche filtrante et une deuxième structure de cartouche filtrante distincte

Le matériau adsorbant spécifique est fabriqué par un procédé sol-gel pour incorporation dans une structure nanoporeuse, d'oxydes métalliques, des molécules sondes aptes à piéger des aldéhydes. Avantageusement, ce procédé est un procédé d'incorporation One-Pot.

La molécule sonde portant une fonction réactive pouvant réagir avec une fonction aldéhyde est choisie parmi les énaminones et les couples β-dicétone/amine correspondants, les imines, les amines, les imides et les hydrazines, ou les sels dérivés de ces composés.

Dans un mode de réalisation, la structure assurant le maintien du média filtrant est une structure rigide alvéolaire, les alvéoles contenant le média filtrant.

Dans un mode de réalisation, un film micro-perforé est assemblé sur les faces amont et aval de la structure rigide alvéolaire.

Dans un mode de réalisation, le taux de remplissage des alvéoles par le média filtrant est supérieur à 40%, de préférence supérieur à 50%.

Le matériau adsorbant spécifique est sous forme de granulés. De préférence, les granulés sont cylindriques, avec un rapport L/D>1 dans lequel L correspond à la longueur d'un granulé et D correspond au diamètre d'un granulé ; D est de préférence compris entre 0,1 et 8 mm, très préférentiellement entre 1 et 5 mm, plus préférentiellement entre 2 et 4 mm, encore plus préférentiellement environ 3 mm ; L est de préférence compris entre 1 et 20 mm, très préférentiellement entre 2 et 10 mm, plus préférentiellement est environ 5,5 mm. Le terme environ dans la présente demande de brevet, précédant une valeur chiffrée, signifie une variation de plus ou moins 15% de cette valeur chiffrée.

Dans un mode de réalisation, la structure assurant le maintien du média filtrant est un assemblage de plusieurs films, par exemple du type tissu poreux non tissé sur lesquels sont imprégnés/saupoudrés et/ou pris en sandwich le média filtrant avec ou sans le matériau absorbant ou adsorbant classique.

Dans un mode de réalisation, la masse de matériau adsorbant spécifique représente entre 5 et 95% de la masse de matériau absorbant ou adsorbant classique.

Dans un mode de réalisation, la surface spécifique du matériau adsorbant spécifique est comprise entre 400 et 1200 m²/g, de préférence entre 450 et 800 m²/g, très préférentiellement environ 600 m²/g.

La présente demande concerne également un appareil de purification de l'air comprenant le dispositif de filtration défini dans l'une des variantes ci-dessus.

D'autres caractéristiques et avantages de la présente invention apparaîtront plus clairement à la lecture de la description détaillée qui suit, de modes de réalisation de l'invention donnés à titre d'exemple nullement limitatifs et illustrés par les dessins annexés, dans lesquels
- la figure 1 représente une vue éclatée d'un appareil de filtration comprenant le dispositif de filtration;
- la figure 2 représente schématiquement une première structure de cartouche filtrante;
- les figures 3A et 3B représentent respectivement une vue de face et une vue en perspective d'une deuxième structure du dispositif de filtration ;
- la figure 4 représente l'évolution de la concentration de formaldéhyde dans une pièce avec une première variante de réalisation du dispositif de filtration ;
- la figure 5 représente l'évolution de la concentration de formaldéhyde dans une pièce avec une deuxième variante de réalisation du dispositif de filtration.

L'invention a pour objectif majeur un dispositif de filtration comprenant une pluralité de matériaux filtrants. Les différents matériaux filtrants combinés ou séparés permettent d'éliminer par absorption et adsorption les composés organiques volatils présents dans l'air ambiant. Selon l'invention, les composés organiques volatils adsorbés et adsorbés sont notamment des aldéhydes et/ou des solvants. Le dispositif de filtration est destiné à être installé dans un appareil de purification de l'air ambiant pouvant fonctionner à des débits de quelques m³/h à plusieurs milliers de m³/h.

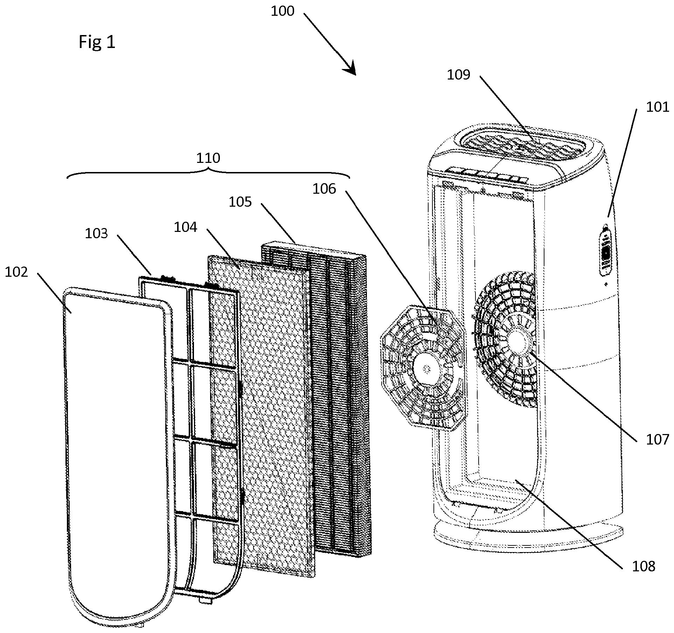

La figure 1 représente un appareil 100 de purification de l'air ambiant susceptible de recevoir le dispositif de filtration selon l'invention. L'appareil comprend essentiellement un boitier 101 comprenant un logement 108 pour un dispositif de filtration 110. Le logement 108 est fermé par un couvercle 102. Des ouïes d'entrée (non représentées) sont formées pour permettre à l'air ambiant de pénétrer dans l'appareil 100. Dans un mode de réalisation, les ouïes d'entrée sont situées au voisinage du couvercle 102 du boîtier 101. Dans un mode de réalisation, les ouïes d'entrée ne sont pas situées au voisinage du couvercle 102 du boîtier 101. Le logement comprend en amont du dispositif de filtration 110 un motoventilateur (non représenté) qui crée une aspiration dans le logement 108 au travers d'une grille 107. Dans un mode de réalisation, la forme de la grille 107 est circulaire. Dans un mode de réalisation, la forme de la grille 107 est quelconque. Le boitier 101 comprend également des orifices de sortie 109 de l'air purifié. Dans un mode de réalisation, ces orifices de sortie 109 sont placés sur la partie supérieure du boitier 101. Dans un autre mode de réalisation, ces orifices de sortie 109 sont placés sur une autre face du boitier 101.

Dans un mode de réalisation, le dispositif de filtration 110 comprend au moins deux cartouches filtrantes 104 et 106. Dans un mode de réalisation de l'invention, le dispositif de filtration comprend quatre cartouches filtrantes distinctes 103, 104, 105, 106, telles que représentées en figure 1.

Selon l'invention, une première structure de cartouche filtrante 104 contient un matériau absorbant ou adsorbant classique choisi parmi le charbon actif ou les zéolites. Selon l'invention, le dispositif de filtration 110 comprend une deuxième structure de cartouche filtrante 106, distincte de la première, contenant un média filtrant dans la variante de réalisation représentée en figure 1.

Ce média filtrant est constitué d'un matériau adsorbant spécifique pour piéger des composés très mal éliminés par le matériau absorbant ou adsorbant classique comme par exemple les composés de type aldéhydes et plus particulièrement le formaldéhyde.

Le matériau adsorbant spécifique est un matériau apte à piéger spécifiquement un polluant ou une famille de polluants. Le média filtrant peut piéger la famille des aldéhydes par l'intermédiaire de molécules sondes (ou principe actif) adaptées et incorporées dans une structure nanoporeuse. Un choix éclairé de molécules sondes peut permettre de piéger plus spécifiquement un polluant comme par exemple le formaldéhyde. Le procédé de fabrication du matériau adsorbant spécifique de type sol-gel permet une introduction du principe actif lors de son élaboration en One-pot (in situ) et non pas par imprégnation. Le procédé de fabrication du matériau adsorbant spécifique permet d'introduire beaucoup de principes actifs sans imprégnation. La saturation de la surface spécifique par imprégnation est ainsi évitée. Dans un mode de réalisation, le matériau adsorbant spécifique ne contient ni zéolite ni charbon actif.

Dans un mode de réalisation préféré, l'air ambiant pénétrant par les ouïes d'entrée au sein du logement 108 traversera, dans un premier temps, la cartouche filtrante 104 contenant un matériau absorbant ou adsorbant classique. Dans ce même mode de réalisation préféré et dans un second temps, l'air traversera le média filtrant contenant un matériau adsorbant spécifique.

Dans un mode de réalisation, les cartouches filtrantes ont une forme de cylindre. Dans un mode de réalisation, les cartouches filtrantes ont une forme de parallélépipède. Dans un mode de réalisation, les cartouches filtrantes sont planes. Dans un mode de réalisation, les cartouches filtrantes sont en volume. Dans un mode de réalisation, les cartouches filtrantes sont définies dans un repère orthogonal. La plus faible des dimensions en comparaison avec les deux autres dimensions (x et y) sera l'axe z. Dans un mode de réalisation, z et le flux d'air ont une direction commune. Dans un mode de réalisation, z et le flux d'air ont des directions différentes.

Dans un mode de réalisation, les cartouches filtrantes ont des dimensions équivalentes dans les trois directions. Dans un mode de réalisation, les cartouches filtrantes ont deux dimensions réduites en comparaison avec la troisième. Dans ce mode de réalisation, une des plus faibles dimensions pourra représenter z.

Dans un mode de réalisation, une cartouche filtrante supplémentaire 103 est un film perforé pour arrêter les poussières et/ou débris. Dans ce mode de réalisation, la cartouche filtrante 103 est placée en amont dans le dispositif de filtration 110. Dans un mode de réalisation, une cartouche filtrante supplémentaire 105 est un filtre HEPA, filtre à air capable de filtrer, en un passage, au moins 99,95 % des particules de diamètre supérieur ou égal à 0,3 µm.

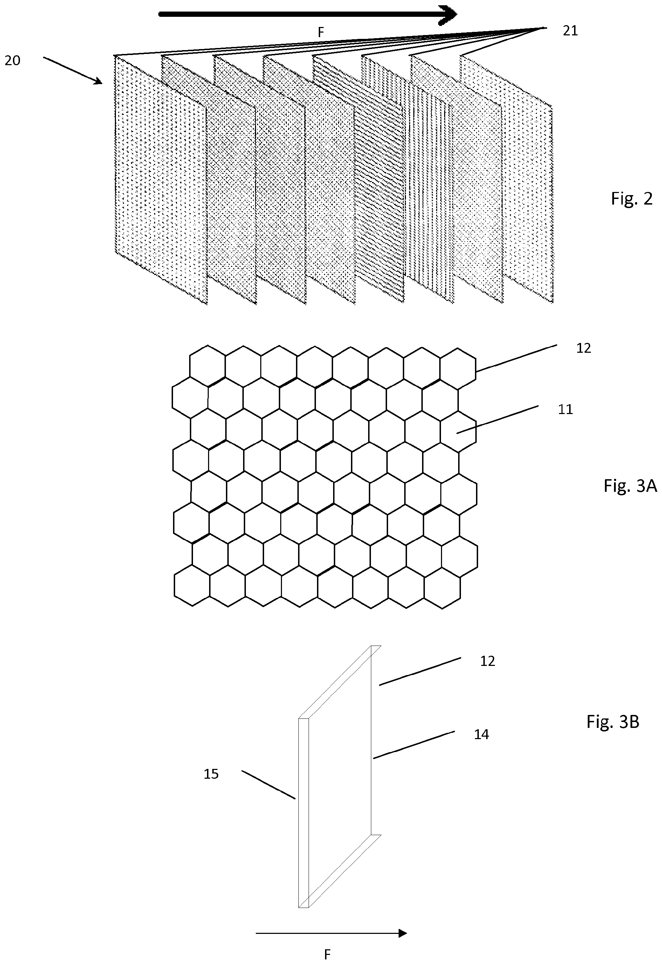

Les figures 2, 3A et 3B représentent des modes de réalisation de structures de cartouches filtrantes susceptibles d'être utilisées dans le cadre de l'invention.

Ces structures permettent de maintenir le média filtrant dans le flux d'air traversant l'appareil de purification de l'air.

La figure 2 représente une structure 20 comprenant une succession de films 21. Dans un mode de réalisation, le média filtrant est imprégné dans un film 21. Dans un mode de réalisation, le média filtrant est imprégné dans plusieurs films 21. L'ensemble des films 21 est ensuite assemblé pour former la cartouche filtrante. Dans un mode de réalisation, l'assemblage des films est réalisé par collage. Dans un mode de réalisation, l'assemblage des films est réalisé par soudage. Dans un mode de réalisation, l'assemblage des films est réalisé par une technique d'assemblage.

Les dimensions et le nombre de films 21 dépendent essentiellement des performances souhaitées de l'appareil de purification de l'air. Dans un mode de réalisation, au moins un film 21 est fonctionnalisé par une molécule sonde. Dans un mode de réalisation, aucun film 21 n'est fonctionnalisé par une molécule sonde.

Comme représentée en figures 3A et 3B, la cartouche filtrante 106 comprend une structure 12 rigide alvéolaire. Dans un mode de réalisation, la structure alvéolaire est de type nid d'abeille. Dans un mode de réalisation, la structure alvéolaire contient des alvéoles de formes géométriques quelconques. Le média filtrant est placé dans les alvéoles 11 de la structure 12. Dans un mode de réalisation et afin de garantir le maintien du média filtrant dans les alvéoles 11, un film micro-perforé est placé sur les deux faces aval 14 et amont 15 de la structure 12 rigide alvéolaire. Dans un mode de réalisation, le film est totalement transparent vis-à-vis du flux d'air et ne possède pas de fonction de filtration. Dans un mode de réalisation, le film est partiellement transparent vis-à-vis du flux d'air. Dans un mode de réalisation, le film possède au moins une fonction de filtration.

Dans le cas du matériau adsorbant spécifique sol-gel, le polluant réagit avec le principe réactif pour donner un troisième corps d'un poids moléculaire plus important et moins nocif qui restera piégé dans le réseau nanoporeux du média filtrant comprenant un matériau adsorbant spécifique. Contrairement aux autres adsorbants, ce matériau adsorbant spécifique effectue un piégeage définitif par transformation chimique irréversible du polluant.

Ainsi en choisissant de façon appropriée la molécule sonde, il est possible d'éliminer les polluants nocifs tels que le formaldéhyde, molécule que les matériaux adsorbants classiques ne peuvent pas ou peu éliminer.

A titre d'exemple, le matériau adsorbant spécifique est choisi parmi les matériaux décrits dans le brevet FR 2890745.

Le matériau adsorbant spécifique comprend une matrice nanoporeuse sol-gel d'oxydes métalliques, ladite matrice contenant au moins une molécule sonde portant au moins une fonction réactive pouvant réagir avec une fonction aldéhyde.

La molécule sonde portant une fonction réactive pouvant réagir avec une fonction aldéhyde est choisie parmi les énaminones et les couples β-dicétone/amine correspondants, les imines, les amines, les imides et les hydrazines, ou les sels dérivés de ces composés.

Les énaminones seront caractérisées par la formule ci-dessous : 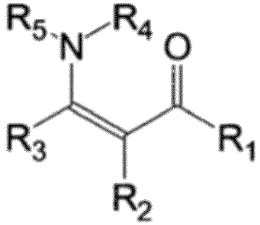 dans laquelle :
- R1 correspond à un hydrogène, un radical alkyle ou aryle,
- R2 correspond à un hydrogène,
- R3 correspond à un hydrogène, un radical alkyle ou aryle,
- R4 correspond à un hydrogène, un radical alkyle ou aryle,
- R5 correspond à un hydrogène.

Par ailleurs, le couple β-dicètone/amine répond à la formule ci-dessous : 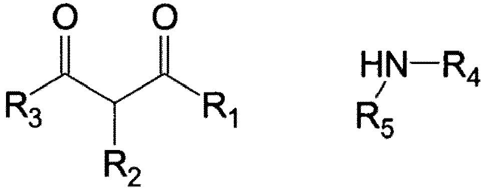 dans laquelle :
- R1 correspond à un hydrogène, radical alkyle ou aryle,
- R2 correspond à un hydrogène,
- R3 correspond à un hydrogène, un radical alkyle ou aryle,
- R4 correspond à un hydrogène, un radical alkyle,
- R5 correspond à un hydrogène, ou un sel correspondant,

L'amine pouvant être remplacée par son sel d'ammonium correspondant.

Par ailleurs, l'imine est une base de Schiff choisie parmi le jaune d'acridine, le jaune de méthyle ou de diméthyle.

L'hydrazine répond à la formule suivante : 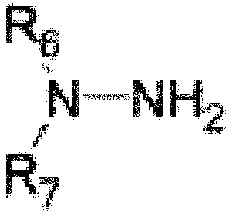 dans laquelle :
- R6 correspond à un hydrogène, un radical alkyle en C1-C20, préférentiellement en C1-C10, plus préférentiellement méthyle, éthyle, isopropyle, butyle, isobutyle, tert-butyle et pentyle, un radical aryle en C3-C16, notamment phényle et aryle sulfonyle,
- R7 correspond à un radical aryle en C3-C16, notamment phényle et aryle sulfonyle.

Selon l'invention, la matrice nanoporeuse sol-gel d'oxydes métalliques est élaborée à partir d'au moins un oxyde métallique de formule ci-dessous :

M(X)m(OR8)n(R9)p

dans laquelle :
- M correspond à un métal choisi parmi le silicium, l'aluminium, le titane, le zirconium, le niobium, le vanadium, l'yttrium et le cérium,
- R8 et R9 correspondent indépendamment à un radical alkyle ou aryle,
- n, m et p sont des entiers, tels que leur somme soit égale à la valence de M et que n soit supérieur ou égal à 2,
- X est un halogène.

Le matériau adsorbant spécifique tel que défini ci-dessus, permettant de piéger spécifiquement les aldéhydes et notamment le formaldéhyde, possède une efficacité de capacité de piégeage vis-à-vis du formaldéhyde supérieure à celle du charbon actif dédié aux composés organiques volatils et supérieure à celle du charbon actif imprégné spécifiquement pour le piégeage du formaldéhyde gazeux. La capacité de piégeage définitif du matériau adsorbant spécifique est au minimum 0,01g de formaldéhyde par gramme de matériau.

Selon l'art antérieur, le charbon actif ou les zéolites éliminent très mal les aldéhydes et en particulier le formaldéhyde alors que ce gaz est d'une part très présent dans l'air ambiant et d'autre part nocif sur la santé. Ainsi, en associant dans un dispositif de filtration d'une part un matériau absorbant ou adsorbant classique et d'autre part un matériau adsorbant spécifique particulièrement efficace pour les aldéhydes et notamment le formaldéhyde, le dispositif de filtration 110 selon l'invention permet d'éliminer à la fois les aldéhydes et en particulier le formaldéhyde grâce à la présence du matériau adsorbant spécifique nanoporeux fonctionnalisé avec des molécules sondes et les autres composés organiques volatils en particulier la famille des hydrocarbures aromatiques monocycliques (Benzène, Toluène, Ethylène, Xylène,...) grâce au charbon actif ou aux zéolites.

L'association des matériaux absorbants classiques et adsorbants spécifiques est constituée par association en structures de cartouches filtrantes 104, 106 successives mono-matériau. Les cartouches classiques peuvent être un filtre à pollen, un filtre de charbon actif, un filtre HEPA, et associées à une ou plusieurs cartouches selon l'invention, qui peuvent être intercalées entre les cartouches classiques ou placées en dernier, après les cartouches classiques. Ces associations permettent d'éliminer les aldéhydes ainsi que de purifier l'air ambiant et grâce à la disposition des cartouches filtrantes énoncée auparavant, de limiter le relargage causé par la zéolite ou le charbon actif. Dans un mode de réalisation de l'invention, le dispositif de filtration comprend quatre cartouches filtrantes distinctes 103, 104, 105, 106, telles que représentées en figure 1. Dans un mode de réalisation, la cartouche filtrante 103 est un film perforé pour arrêter les poussières et/ou débris, la cartouche filtrante 104 contient les matériaux absorbants classiques, la cartouche filtrante 105 est un filtre HEPA, filtre à air capable de filtrer, en un passage, au moins 99,95 % des particules de diamètre supérieur ou égal à 0,3 µm et enfin la cartouche filtrante 106 contient le média adsorbant spécifique.

Selon l'invention, les performances de dépollution/filtration de la cartouche sont déterminées notamment par les paramètres suivants :
- la proportion en masse entre le matériau absorbant ou adsorbant classique et le matériau adsorbant spécifique,
- la surface spécifique du matériau adsorbant spécifique,
- la forme du matériau adsorbant spécifique,
- les caractéristiques physiques et chimiques du matériau absorbant ou adsorbant classique.

La proportion en masse entre le matériau adsorbant spécifique et le matériau absorbant ou adsorbant classique peut varier d'un facteur 5/95 à 95/5, préférentiellement d'un facteur de 6/94 à 50/50 et encore plus préférentiellement d'un facteur 8/92 à 15/85: le choix particulier est réalisé en fonction de la nature et de la quantité des polluants présents dans l'air ambiant et des performances souhaitées à atteindre.

A titre d'exemple pour un air contenant 20µg/m3 de formaldéhyde et 200µg/m3 d'autres composés organiques volatils, il sera utilisé préférablement un rapport massique matériau adsorbant spécifique/charbon actif de 10/90. Toutefois, il est possible d'améliorer drastiquement l'efficacité du média filtrant selon l'invention en doublant, quadruplant, etc. la quantité de matériau adsorbant spécifique.

Ainsi dans le cas d'air ambiant très pollué en formaldéhyde contenant par exemple 10 fois plus de formaldéhyde que d'autres composés organiques volatils, il pourra être utilisé un dispositif de filtration 110 avec un rapport de matériau adsorbant spécifique/charbon actif de 90/10.

La surface spécifique recherchée pour le matériau adsorbant spécifique est inversement proportionnelle à la taille des pores. Ainsi, plus la surface spécifique est grande plus la taille des pores est petite. Ainsi pour avoir une surface spécifique de l'ordre de 800m2/g, le diamètre des pores est typiquement entre 0.20 et 10 nm.

Le meilleur compromis entre une surface spécifique maximum qui permet d'accroître la capacité et l'efficacité de piégeage et une limite à ne pas dépasser afin d'avoir des pores de taille suffisante pour que les polluants puissent entrer dans les pores est recherché. La plage de surface spécifique visée se situe entre 100 et 1500m²/g dépendant de la taille de la molécule polluante à éliminer, et préférentiellement entre 600 et 800m²/g pour le formaldéhyde.

Le choix de la forme de granulé pour le matériau adsorbant spécifique est déterminé pour avoir le maximum de surface de léchage (surface externe du granulé) pour accroître l'efficacité de piégeage tout en ayant la plus faible perte de charge pour minimiser l'énergie nécessaire à la dépollution. Dans un mode de réalisation, le granulé est cylindrique. Dans un mode de réalisation, le granulé est sphérique. Dans un mode de réalisation, le granulé est de forme allongée. Dans un mode de réalisation, le granulé est de forme quelconque.

Les formes cylindriques de forme allongée, c'est-à-dire ayant un rapport L/D >1 (L longueur, D diamètre), sont très intéressantes car elles sont facilement fabricables par moulage ou extrusion. Leurs formes allongées évitent que les surfaces planes s'accolent pour ne pas diminuer la surface de léchage et ne pas augmenter de pertes de charges et de l'énergie. Dans ce cas, les dimensions (longueur) de l'ordre du millimètre, préférentiellement de 0,1 à 8mm, conduisent également au meilleur compromis. Dans un mode de réalisation, le matériau adsorbant spécifique se présente sous la forme de granulés cylindrique avec une longueur L = 5,5 mm et un diamètre D = 3 mm.

Selon un autre mode de réalisation, le granulé peut prendre la forme broyée conduisant à des particules de l'ordre du millimètre, préférentiellement de 0,12 à 8mm. Cette forme présente également un intérêt car elle donne, pour un diamètre de particule sensiblement identique, une surface de léchage supérieure à celle des particules sphériques de même diamètre.

Des granulés de taille inférieure au millimètre peuvent être également utilisés à condition d'utiliser des supports (fibre) inter-granulés permettant de disperser le granulé pour diminuer la perte de charge. Il peut dans ce cas s'envisager des films de granulés de matériau adsorbant spécifique emprisonnés dans des tissus permettant d'augmenter la surface du filtre afin de diminuer les pertes de charges.

Par ailleurs, d'autres critères tels que les dimensions de la structure rigide alvéolaire et le taux de remplissage des alvéoles peuvent également être ajustés pour obtenir les performances souhaitées de la cartouche filtrante selon l'invention. Ainsi, la taille des alvéoles de la structure est comprise entre 1 et 15 et préférentiellement entre 1 et 10 fois la taille maximale d'un granulé de matériau adsorbant spécifique. Cette dimension permet d'obtenir une bonne répartition des granulés dans les alvéoles et de pouvoir recevoir au minimum 1 granulé par alvéole de la structure rigide alvéolaire.

De même, le taux de remplissage des alvéoles de média filtrant est par exemple d'au moins 40%. Ceci permet de limiter l'encombrement d'une deuxième structure de la cartouche filtrante 106 selon l'invention.

Le dispositif de filtration 110 selon l'invention ne remet pas en cause l'architecture générale des appareils de purification de l'air ambiant connue. En effet, il suffit d'insérer les différentes structures de cartouches filtrantes aux emplacements prévus dans le logement 108 de l'appareil de purification. La composition et les caractéristiques de la cartouche filtrante selon l'invention seront alors ajustées en fonction des caractéristiques de l'appareil de purification de l'air ambiant, notamment en fonction du débit d'air et des dimensions de la cartouche.

Le dispositif de filtration pourra être caractérisé par un ratio de matériau défini par le rapport entre la masse de matériau adsorbant spécifique (g) et le débit d'air (m3/h) de l'appareil. Dans un mode de réalisation, le ratio de matériau sera compris entre 1/10 et 1, plus préférentiellement à 1/7.

Exemples de dimensionnement du dispositif de filtration 110 selon l'invention :
Le premier exemple est défini pour réaliser la dépollution d'une pièce ayant les caractéristiques suivantes :
- volume : 12m3,
- renouvellement d'air neuf : 5m3/h,
- taux d'émission de formaldéhyde : 70,6/µg/m3.

Les caractéristiques de l'appareil de purification utilisant la cartouche filtrante selon l'invention sont les suivantes :
- débit d'air : 140m3/h,
- masse de matériau adsorbant spécifique : 20g.
- ratio de matériau/débit d'air : 1/7.

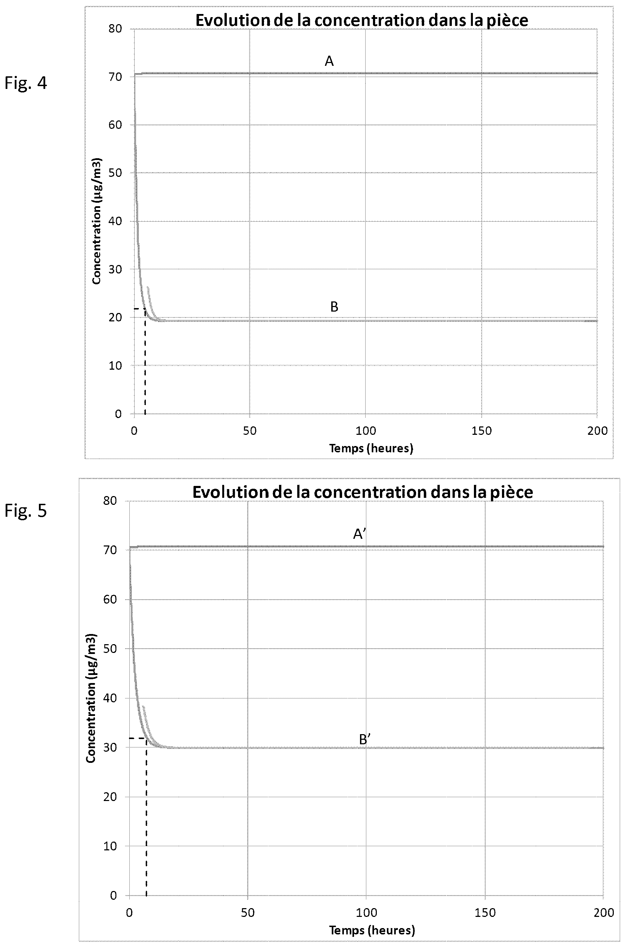

En figure 4 est représentée l'évolution de la concentration de formaldéhyde dans la pièce.

La courbe A représente la valeur témoin à 70,6µg/m3 sans appareil de purification de l'air ambiant selon l'invention.

La courbe B représente la variation de la concentration lorsque l'appareil de purification de l'air ambiant selon l'invention est en fonctionnement.

Ainsi, on note qu'en quelques heures de fonctionnement le taux d'émission de formaldéhyde descend sous 20µg/m3 (inférieur au taux de 30µg/m3 recommandé dans les établissements recevant du public).

Le deuxième exemple est défini pour réaliser la dépollution d'une pièce ayant les mêmes caractéristiques que dans l'exemple précédent mais avec les caractéristiques de l'appareil de purification de l'air ambiant utilisant la cartouche filtrante selon l'invention qui sont les suivantes :
- débit d'air : 70m3/h,
- masse de matériau adsorbant spécifique : 10g.
- ratio de matériau /débit d'air: 1/7.

En figure 5 est représentée l'évolution de la concentration de formaldéhyde dans la pièce.

La courbe A' représente la valeur témoin à 70,6µg/m3 sans appareil de purification de l'air ambiant selon l'invention.

La courbe B' représente la variation de la concentration lorsque l'appareil de l'air ambiant selon l'invention est en fonctionnement.

Ainsi, on note qu'en quelques heures de fonctionnement, le taux d'émission de formaldéhyde est de l'ordre de 30µg/m3.

On comprendra que diverses modifications et/ou améliorations évidentes pour l'homme du métier peuvent être apportées aux modes de réalisation de l'invention décrits dans la présente description sans sortir du cadre de l'invention défini par les revendications annexées.

Ainsi, les exemples de réalisation ont été donnés pour un appareil de purification de l'air ambiant à usage domestique (pièce de quelques m3). Des applications des cartouches filtrantes selon l'invention dans un appareil de purification d'air ambiant de plus grandes dimensions (par exemple adapté pour un établissement recevant du public) sont envisageables. Il suffit soit d'utiliser plusieurs cartouches soit des cartouches de plus grandes dimensions.

## Revendications

1. Dispositif de filtration (110) pour appareil de purification de l'air comprenant une première structure de cartouche filtrante (104) contenant un matériau absorbant ou adsorbant classique choisi parmi le charbon actif ou la zéolite, **caractérisé en ce que** le dispositif comprend une deuxième structure de cartouche filtrante (106) distincte assurant le maintien d'un média filtrant constitué d'un matériau adsorbant spécifique poreux, ledit matériau est
- sous forme de granulés cylindriques de forme allongée présentant un rapport L/D>1 dans lequel L correspond à la longueur d'un granulé et D correspond au diamètre d'un granulé, ou sous forme de granulés de forme broyée, la forme broyée conduisant à des particules de taille de l'ordre de 0,12 à 8 mm,
- fonctionnalisé avec au moins une molécule sonde portant une fonction réactive pouvant réagir avec une fonction aldéhyde, de manière à permettre de piéger des polluants chimiques du type aldéhydes, la molécule sonde est choisie parmi les énaminones et les couples β-dicétone/amine correspondants, les imines, les amines, les imides et les hydrazines, ou les sels dérivés de ces composés,
- fabriqué par un procédé sol-gel pour incorporation dans une structure nanoporeuse d'oxydes métalliques desdites molécules sondes.

2. Dispositif de filtration (110) pour appareil de purification de l'air selon la revendication 1, **caractérisé en ce que** la structure (106) assurant le maintien du média filtrant est une structure (12) rigide alvéolaire, les alvéoles (11) contenant le média filtrant.

3. Dispositif de filtration (110) pour appareil de purification de l'air selon la revendication 2, **caractérisé en ce qu'**un film micro-perforé est assemblé sur les faces amont (15) et aval (14) de la structure (12) rigide alvéolaire.

4. Dispositif de filtration (110) pour appareil de purification de l'air selon l'une quelconque des revendications 2 ou 3, **caractérisé en ce que** le taux de remplissage des alvéoles au média filtrant est supérieur à 40%.

5. Dispositif de filtration (110) pour appareil de purification de l'air selon l'une quelconque des revendications 1 à 4, **caractérisé en ce que** la structure (20) assurant le maintien du média filtrant est un assemblage de plusieurs films de type tissu poreux non tissé (21) sur lesquels sont imprégnés/saupoudrés le matériau absorbant ou adsorbant classique.

6. Dispositif de filtration (110) pour appareil de purification de l'air selon l'une des revendications précédentes, **caractérisé en ce que** la masse de matériau adsorbant spécifique représente entre 5 et 95% de la masse de matériau absorbant ou adsorbant classique.

7. Dispositif de filtration (110) pour appareil de purification de l'air selon l'une des revendications précédentes, **caractérisé en ce que** le matériau adsorbant spécifique poreux présente une surface spécifique comprise entre 400 et 1200 m²/g.

8. Appareil de purification de l'air, **caractérisé en ce qu'**il comprend au moins un dispositif de filtration défini selon l'une des revendications 1 à 7.

## Patentansprüche

1. Filtrationsvorrichtung (110) für eine Luftreinigungseinrichtung, umfassend eine erste Filterpatronenstruktur (104), die ein herkömmliches absorbierendes oder adsorbierendes Material enthält, ausgewählt aus Aktivkohle oder Zeolith, **dadurch gekennzeichnet, dass** die Vorrichtung eine zweite, unterschiedliche Filterpatronenstruktur (106) umfasst, die das Halten eines Filtermediums gewährleistet, die aus einem spezifischen porösen Adsorptionsmaterial besteht, wobei das Material
- in Form von zylindrischen Granalien mit länglicher Form, die ein Verhältnis L/D > 1 aufweisen, wobei L der Länge einer Granalie entspricht und D dem Durchmesser einer Granalie entspricht, oder in Form von Granulat in zerkleinerter Form vorliegt, wobei die zerkleinerte Form zu Partikeln mit einer Größe in der Größenordnung von 0,12 bis 8 mm führt,
- mit mindestens einem Sondenmolekül funktionalisiert ist, das eine reaktive Funktion trägt, die mit einer Aldehydfunktion auf eine Weise reagieren kann, um das Einfangen chemischer Schadstoffe vom Aldehydtyp zu ermöglichen, wobei das Sondenmolekül ausgewählt ist aus die Enaminonen und die Paaren von entsprechendem β-Diketon/Amin, Iminen, Aminen, Imiden und Hydrazinen oder den von diesen Verbindungen abgeleiteten Salzen,
- durch ein Sol-Gel-Verfahren zur Inkorporation in eine nanoporöse Struktur aus Metalloxiden der Sondenmoleküle hergestellt ist.

2. Filtrationsvorrichtung (110) für eine Luftreinigungseinrichtung nach Anspruch 1, **dadurch gekennzeichnet, dass** die Struktur (106), die das Halten des Filtermediums gewährleistet, eine starre Wabenstruktur (12) ist, wobei die Alveolen (11) das Filtermedium enthalten.

3. Filtrationsvorrichtung (110) für eine Luftreinigungseinrichtung nach Anspruch 2, **dadurch gekennzeichnet, dass** eine mikroperforierte Folie auf der stromaufwärtigen (15) und stromabwärtigen (14) Seite der starren Wabenstruktur (12) angeordnet ist.

4. Filtrationsvorrichtung (110) für eine Luftreinigungseinrichtung nach einem der Ansprüche 2 oder 3, **dadurch gekennzeichnet, dass** der Füllgrad der Alveolen mit Filtermedium höher als 40 % ist.

5. Filtrationsvorrichtung (110) für eine Luftreinigungseinrichtung nach einem der Ansprüche 1 bis 4, **dadurch gekennzeichnet, dass** die Struktur (20), die das Halten des Filtermediums gewährleistet, eine Anordnung aus mehreren porösen, gewebeartigen Vliesfolien (21) ist, auf denen das herkömmliche absorbierende oder adsorbierende Material imprägniert/gestreut sind.

6. Filtrationsvorrichtung (110) für eine Luftreinigungseinrichtung nach einem der vorstehenden Ansprüche, **dadurch gekennzeichnet, dass** die Masse des spezifischen adsorbierenden Materials zwischen 5 und 95 % der Masse des herkömmlichen absorbierenden oder adsorbierenden Materials repräsentiert.

7. Filtrationsvorrichtung (110) für eine Luftreinigungseinrichtung nach einem der vorstehenden Ansprüche, **dadurch gekennzeichnet, dass** das spezifische poröse adsorbierende Material eine spezifische Oberfläche zwischen 400 und 1200 m²/g aufweist.

8. Luftreinigungseinrichtung, **dadurch gekennzeichnet, dass** sie mindestens eine Filtrationsvorrichtung definiert nach einem der Ansprüche 1 bis 7 umfasst.

## Claims

1. Filtration device (110) for an air purification apparatus comprising a first filter cartridge structure (104) containing a conventional absorbent or adsorbent material chosen from activated carbon or zeolite, **characterized in that** the device comprises a separate second filter cartridge structure (106) ensuring the holding of a filter media consisting of a specific porous adsorbent material, said material is
- in the form of cylindrical granules of elongated shape having a ratio L/D>1, wherein L corresponds to the length of a granule and D corresponds to the diameter of a granule, or in the form of granules in crushed form, the crushed form leading to particles of size of about 0.12 to 8 mm,
- functionalized with at least one probe molecule carrying a reactive function capable of reacting with an aldehyde function, so as to allow chemical pollutants of the aldehyde type to be trapped, the probe molecule is chosen from the enaminones and the corresponding β-diketone/amine pairs, imines, amines, imides and hydrazines, or the salts derived from these compounds,
- manufactured by a sol-gel process for incorporation into a nanoporous structure of metal oxides of said probe molecules.

2. Filtration device (110) for an air purification device according to claim 1, **characterized in that** the structure (106) ensuring the holding of the filter media is a rigid alveolar structure (12), the alveoli (11) containing the filter media.

3. Filtration device (110) for an air purification apparatus according to claim 2, **characterized in that** a micro-perforated film is assembled on the upstream (15) and downstream (14) faces of the rigid alveolar structure (12).

4. Filtration device (110) for an air purification apparatus according to any one of claims 2 or 3, **characterized in that** the filling rate of the cells with the filter media is greater than 40%.

5. Filtration device (110) for an air purification apparatus according to any one of claims 1 to 4, **characterized in that** the structure (20) ensuring the holding of the filter media is an assembly of several non-woven porous fabric type films (21) on which the classic absorbent or adsorbent material is impregnated/sprinkled.

6. Filtration device (110) for an air purification apparatus according to one of the preceding claims, **characterized in that** the mass of specific adsorbent material represents between 5 and 95% of the mass of conventional absorbent or adsorbent material.

7. Filtration device (110) for air purification apparatus according to one of the preceding claims, **characterized in that** the specific porous adsorbent material has a specific surface area of between 400 and 1200 m²/g.

8. Air purification apparatus, **characterized in that** it comprises at least one filtration device defined according to one of claims 1 to 7.
